# EUROPEAN PATENT APPLICATION

(11) **EP 4 257 447 A1**
(43) Date of publication of application: **11.10.2023**
(21) Application number: 22305445.3
(22) Date of filing: 04.04.2022
(51) Int. Cl.: B61B 13/08, B32B 1/00

(54) **FRICTIONLESS TRANSPORTATION SYSTEM AND CONTACTLESS BRAKING SYSTEM FOR SUCH**

(71) Applicant: Renaissance Fusion, 38600 Fontaine (FR)
(72) Inventor: VOLPE, Francesco, 38600 FONTAINE (FR)
(74) Representative: Cabinet Beaumont

(57) **Abstract**

The present disclosure relates to an assembly for a transportation system, the assembly comprising a plurality of magnetic wall modules (100a, 100b) coupled to each other, wherein each module is adapted to conducting current in order to form a magnetic field, and has a first wall (106a, 106b) and a second wall (104a, 104b) assembled together, wherein the second wall has a groove (202a, 202b) separating said second wall into at least two different electrically conducting regions.

## Description

### Technical field

The present disclosure relates in general to the field of transportation systems, more particularly to a frictionless mass transport system operated by a magnetic field; in addition, the present disclosure is also related to transportation systems where a magnetic field is used for braking.

### Background art

Transportation of people and cargo is one of the most basic needs of the modern world. Transportation that has become increasingly difficult and costly in recent years. On top of that, large parts of the world are still unconnected. There are no transportation means in-between the millions in Africa, South America, the Middle East and other parts of the world.

The present transportation systems, including airplanes, automobiles, ships, trains, and railways share common limitations; among them the dependence on carbon fuels, and the long, complex, and costly fabrication times. Although there have been several advances in recent years like the magnetic levitation trains (maglev) constructed in Germany and Japan, complications remain with such systems.

In a maglev train, the train floats a short distance on top of the rail due to a magnetic field. The magnetic field may also be used to move the train. The operation of the Maglev trains like the German Transrapid and the Japanese MLX can be summarized as consisting of two stages depending on the speed. The two stages may be identified as a low speed stage and a high-speed stage, separated by a speed threshold of 160km/h.

During the low speed stage, below or at 160km/h, the train receives power through physical electrical contacts. As the electrical contacts are directly touching each other during the low speed stage, energy is lost due to friction. During the high-speed stage, in which the train travels at over 160km/h, power is supplied through induction, without requiring a physical electrical contact. In order for the train to operate at these speeds, large magnet coils that produce the magnetic field must be constructed. These coils are usually constructed to the sides of the rails and accompany the train throughout the track, comprising a guiding structure for the train. The guiding structure, which contains the magnetic coils, must be carefully aligned and any construction imperfections result in a massive waste of resources, including time and money. Presently, the guiding structure of maglev trains is open to the environment, therefore the train cart is subject to rain, snow, sunlight, and other environmental hazards, which at high speed include air drag; this limitation translates to inefficiencies during operation resulting in higher maintenance costs, lower maximum speeds and greater power losses.

Presently, the complexity and number of parts involved in the construction of maglev trains, more specifically in the construction of the magnetic coils required for their operation, in addition to the high costs involved prevent maglev train manufacturers from providing a solution to the mentioned inefficiencies.

Another transportation system called the Swissmetro has surfaced in recent years. In this system, a closed space, also described as a tube, is brought to a near-vacuum, mostly devoid of air and other particles. A train travels inside the tube. The train in such a system is wheeled; and the wheels are in contact with the inner surface of the tube, which is also lined with a rail, thus increasing friction losses. The rail provides power for the propulsion of the train. Although the train in a Swissmetro may also be fashioned with an independent power source, in practice this takes up too much space, so it is seldomly preferred.

A railway system is described in U.S. Pat. No. 8,505,463 to Kwon et al. The railway system described by Kwon comprises a train cart inside a tube suspended by means of magnets mounted on a bogie; the inside of a tube is in a near vacuum. The system described by Kwon requires specific geometric configurations for the mounted magnets and it is also described as using linear synchronous motors which are usually constructed with permanent magnets, these two characteristics make it an expensive alternative to other railway systems. In Kwon's system centering of the train inside the rail must be achieved with careful configuration and monitoring of a control system, further adding a hazardous component to the system: if the control system were to unexpectedly fail, the train would lose centering which could result in a collision.

A system which foregoes rails, bogies and tracks entirely is described in U.S. Pat. No. 7,137,343 to Pulliam. The transportation system disclosed by Pulliam is best described as a sequence of rings each consisting of a flywheel and roller system that guide and drive a train forward. Pulliam fails to disclose a way in which the energy losses apparent from the friction forces involved in the action of the roller and the flywheel may be overcome. Additionally, Pulliam's system may not achieve speeds comparable to those of the maglev trains as it is limited by the power transfer capacities of motors.

There remains a need for a transportation system that is easier to construct, comprising less and simpler components and that allows for a train or another appropriate vehicle inside a near-vacuum to effortlessly traverse the space without excessive losses like those involved in friction effects. As braking systems are usually the main source of friction losses in a transportation system, a system that allows for contactless braking is also needed.

### Summary of Invention

One embodiment addresses all or some of the drawbacks of known transportation systems.

One embodiment provides an assembly for a transportation system, the assembly comprising a plurality of magnetic wall modules coupled to each other, wherein each module is adapted to conducting current in order to form a magnetic field, and has a first wall and a second wall assembled together, wherein the second wall has a groove separating said second wall into at least two different electrically conducting regions.

In one embodiment, the groove of a module is adapted to be connected to the groove of another module to form a continuous groove.

In one embodiment, each module further comprises a third wall assembled to the second wall so that the second wall is between the first wall and the third wall.

In one embodiment, at least a module of the plurality of modules comprises connecting means located on a face of the third wall and adapted to mechanically, and possibly electrically, couple said module to connecting means located on a face of the third wall of another module of the plurality of modules, for example the connecting means comprise a mechanical connector like a flange comprising holes adapted to be aligned with holes of a flange of the other module.

In one embodiment, at least a module of the plurality of modules comprises at least one canal that crosses the first wall of the module, for example to enable a cooling fluid, like nitrogen or helium, flowing through the module, each canal being for example adapted to form a single canal with a canal that crosses the first wall of another module of the plurality of modules.

In one embodiment, the first wall of a module of the plurality of modules is aligned with the first wall of another module of the plurality of modules, the second wall of the module is aligned with the second wall of the other module, and the third wall of the module is aligned with the third wall of the other module.

In one embodiment, the modules are constructed to exhibit superconducting characteristics.

In one embodiment, at least a module of the plurality of modules comprises a stacking of different materials in which:
- the first wall is composed or covered by a material like Hastelloy;
- the second wall includes a superconducting layer, the groove of the at least one module being patterned at least in the superconducting layer, and a shunt layer on the superconducting layer and in the groove, the shunt layer being made of a metal, for example silver.

In one embodiment, the stacking further comprises at least a buffer layer, preferably a plurality of buffer layers, between the first wall and the superconducting layer, the at least one buffer layer being for example conformed of materials like alumina, yttria, magnesium oxide and/or lanthanum manganite; the groove being patterned at least in the buffer and superconducting layers.

In one embodiment, the second wall further includes a repeater layer under the shunt layer, the repeater layer comprising a repetition of the buffer and superconducting layers, preferably several repetitions, for example between 4 and 80 repetitions, the groove being patterned in the buffer, the superconducting and the repeater layers.

In one embodiment, the third wall includes another superconducting layer, preferably a non-perforated and non-grooved layer.

One embodiment provides a magnetic wall module adapted to an assembly according to an embodiment.

One embodiment provides a transportation system comprising a vehicle and a transport container adapted to contain the vehicle, wherein the transport container and/or the vehicle comprises a magnetic wall module according to an embodiment or an assembly according to an embodiment.

In one embodiment, the transport container comprises at least a magnetic wall module according to an embodiment or an assembly according to an embodiment.

In one embodiment, the transport container comprises a low-pressure zone with at least a first magnetic wall module and at least a transition zone adjacent to the low-pressure zone, preferably a transition zone at each end of the low-pressure zone, with at least a second magnetic wall module different from the at least one first magnetic wall modules, for example the low-pressure zone is adapted to be in a near vacuum and the at least one transition zone is adapted to be in a higher pressure than the low-pressure zone.

In one embodiment, the vehicle comprises a housing and at least a magnetic panel positioned in or on a surface of the housing, the at least one magnetic panel comprising a magnetic wall module according to an embodiment or an assembly according to an embodiment.

In one embodiment, the at least one magnetic panel is positioned in order to face the at least one magnetic wall module of the transport container.

In one embodiment, the vehicle comprises extension means, for example an extension rod, adapted to extend at least one magnetic panel with respect to the housing of said vehicle towards the transport container.

In one embodiment, the extension means form at least part of a contactless braking system adapted to brake the vehicle.

In one embodiment, the transport container is a transport cylinder and the vehicle is a magnetic train.

### Advantages

Advantages of several or some aspects may be described as follows: the transport system precludes air resistance so it may achieve high speeds, the transport system is naturally safe because magnetic fields that are not energized stop the train cart, the system is not limited by size of the components as they may be as large or as small as needed, the system is easy to maintain as individual panels may be served as needed. Other technical advantages will become apparent to someone skilled in the art from the detailed description, figures, and claims. Moreover, while specific advantages have been enumerated above, different embodiments may include all, none or some of the advantages listed.

### Brief description of drawings

The foregoing features and advantages, as well as others, will be described in detail in the following description of specific embodiments given by way of illustration and not limitation with reference to the accompanying drawings, in which:
FIG. 1A is a general perspective view of a magnetic wall module.
FIG. 1B is a general perspective view of two magnetic wall modules side by side.
FIG. 1C is a general perspective view of two magnetic wall modules joined together by a flange.
FIG. 2 is an exploded perspective view of a middle plane of two joined magnetic wall modules.
FIG. 3 is an exploded perspective view of a stack of materials that are used to construct the magnetic wall modules.
FIG. 4 is a plan view of several magnetic wall modules disposed forming a transport cylinder.
FIG. 5 is a general view of a magnetic train.
FIG. 6 is a sectioned view of a magnetic train inside a transport cylinder.
FIG. 7 is a sectioned view of a magnetic train inside a transport cylinder with the magnetic train exposed.
FIG. 8 is a general perspective view of the front of a magnetic train.
FIG. 9 is a general perspective view of the front of a magnetic train with a magnetic panel extended.
FIG. 10 is a general perspective view of the back of a magnetic panel.

### Reference numerals

100a, 100b: magnetic wall module
102a, 102b, 302: structural layer (third wall)
104a, 104b, 304: middle layer (second wall)
304a: fill layer (shunt layer)
304b: superconducting layer
106a, 106b, 306: lower layer (first wall)
108a, 108b, 308: refrigeration channel (canal)
110a, 110b: flange of magnetic wall module
112a, 102b: hole
114a, 114b: outer surface of the structural layer
202, 202a, 202b: groove
400: transport cylinder
401: first transition zone
402: low pressure zone
403: second transition zone
400a, 400b, 400c: magnetic wall modules in transport cylinder
410a, 410b, 410c: flanges of magnetic wall modules in transport cylinder
500: magnetic train
502: upper magnetic panel
504: vertical magnetic panel
504a: rear magnetic panel
504b: front magnetic panel
506: car window
508: door
509: door window
1010: rod

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

The figures are not to scale. It should be noted that the drawings refer to an embodiment of the disclosed frictionless transportation system and its associated contactless braking system, sometimes referred simply as transportation system or braking system, respectively, when no ambiguity is anticipated. Other embodiments may be possible, as someone with appropriate training may readily appreciate. The actual dimension and/or shape of each of the components of the embodiment may vary. Only important details of the embodiment are shown, however one of ordinary skill in the art can appreciate how the overall device may be constructed, without undue experimentation. Some details have been omitted from the drawings, but the inventors believe that adding these details is unnecessary for the overall appreciation of the characteristics of the invention disclosed. These omitted details include, among others, elements for holding or fixing the device or its functional components. Some characteristics of the embodiment appear exaggerated to facilitate understanding. The embodiments disclosed, and alternatives observed should not be considered as limiting the invention in any way.

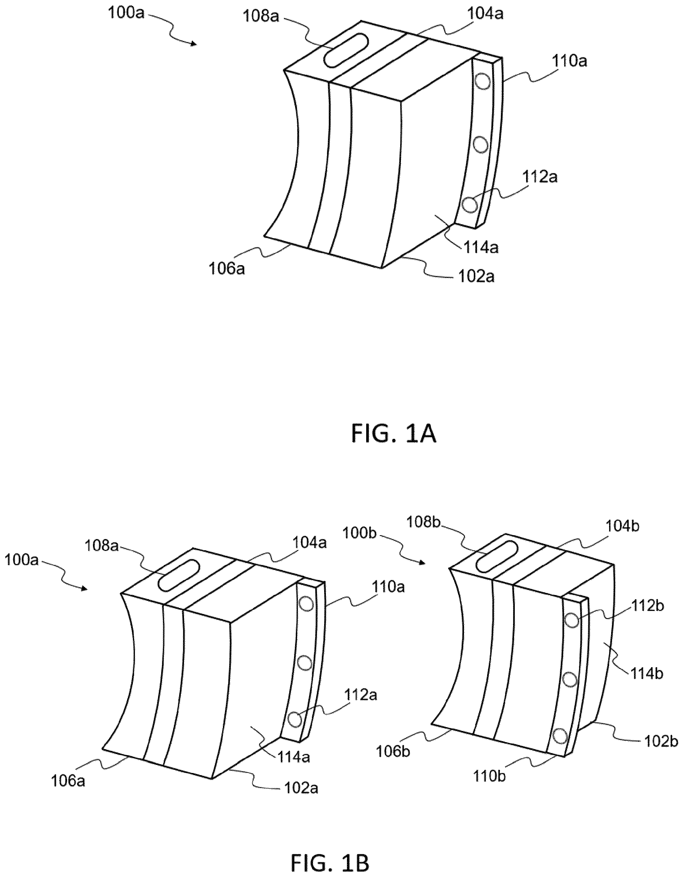

The main element of the frictionless transportation system is the magnetic wall module **100a,** an embodiment of which is shown in FIG. 1A. The magnetic wall module **100a** is coupled to, for example is connected to, at least another magnetic wall module **100b** shown in FIG. 1B to allow current to pass through it, creating a magnetic field. Each magnetic wall module **100a** is comprised of a lower layer **106a,** a middle layer **104a** and a structural layer **102a,** which are assembled to each other by construction. Further, on an external surface **114a** of the structural layer, a flange **110a** may be located. The flange **110a** may further include holes **112a** for creating mechanical connections. A refrigeration tunnel, canal, or channel **108a** may pass through the lower layer **106a.** The lower layer **106a,** middle layer **104a** and structural layer **102a,** may also be referred to as inner, middle, and outer walls, respectively, or to as first, second, and third walls, respectively. When reference is made to a canal, this also includes a tunnel or a channel.

Magnetic wall modules join with other magnetic wall modules to create an assembly and/or a system through which electric current flows and that house a magnetic field.

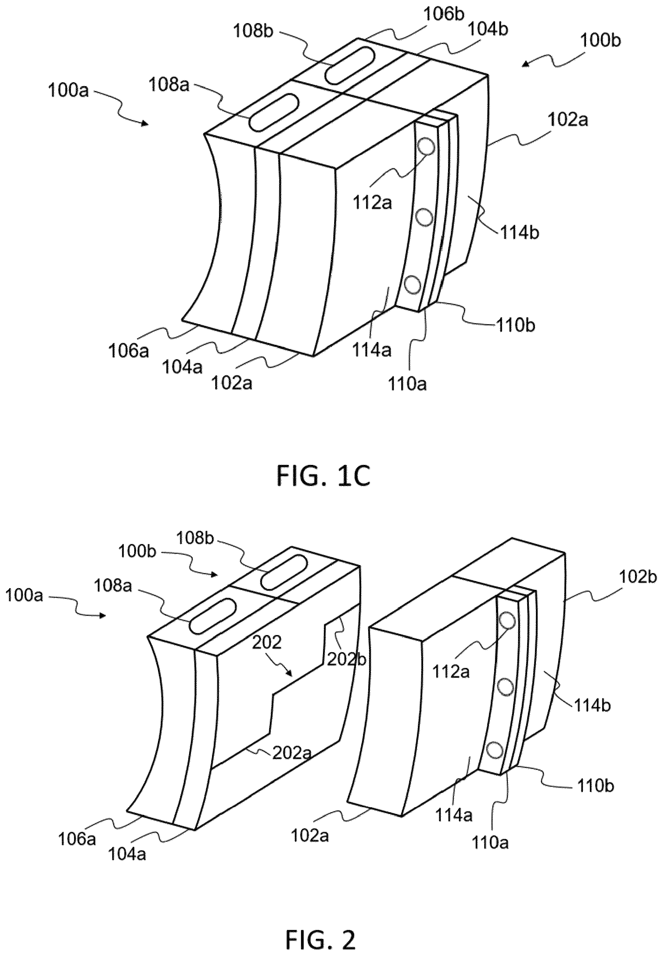

FIG. 1B shows two of these magnetic wall modules, **100a, 100b.** The flange **110b** of the second magnetic wall module **100b** aligns with the flange **110a** of the first magnetic wall module **100a.** Through the use of the holes **112a, 112b** on each of the flanges **110a, 110b** and appropriate connecting means, like screws or bolts, the magnetic wall modules **100a, 100b** join forming a single larger magnetic wall module as shown in FIG. 1C. This results in the alignment of the lower layer **106a, 106b,** middle layer **104a, 104b,** and structural layer **102a, 102b** of each of the magnetic wall modules **100a, 100b.** With the layers aligned, electrical current may flow from one to the other.

In both magnetic wall modules **100a, 100b,** current flows through the middle layer **104a, 104b.** FIG. 2 shows an exploded view of the joint magnetic wall module of FIG. 1C, separated at the middle layer **104a, 104b.** During construction of each of the magnetic wall modules **100a, 100b,** a ridge, wedge or groove **202a, 202b** is created out of the middle layer **104a, 104b** material. The groove **202a, 202b** separates the middle layer **104a, 104b** into different electrically conducting regions resulting in a division of the flow of current and allowing for the current to follow different paths through the magnetic modules **100a, 100b.** The grooves **202a, 202b** may join to form a continuing groove **202.**

When reference is made to a groove, this also includes a ridge or a wedge.

### Example of construction of the magnetic wall modules

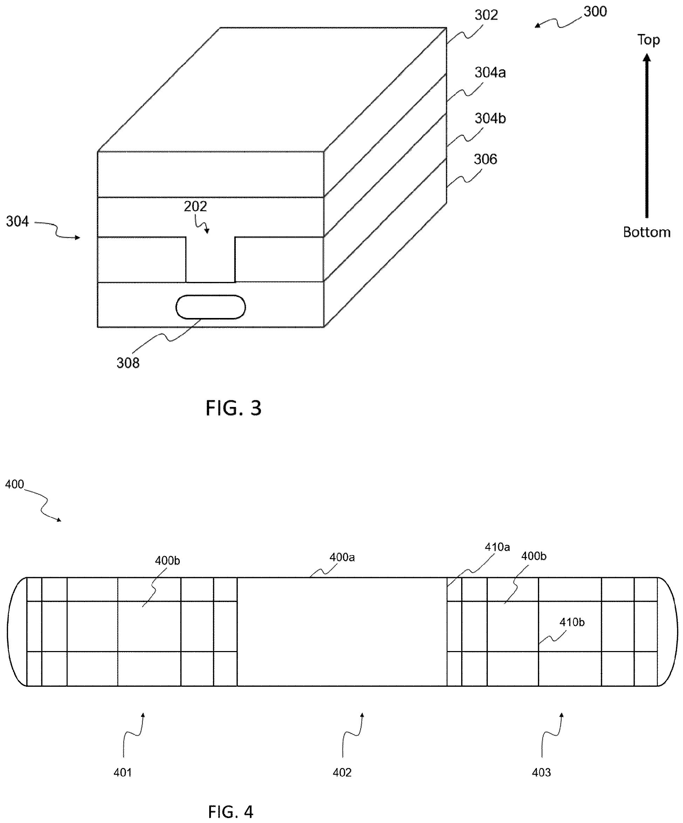

FIG. 3 shows an inner structure of a magnetic wall module **300,** like the magnetic wall module **100a** from FIG. 1A, and/or the magnetic wall module **100b** from FIG. 1B. In the first embodiment shown in FIG. 3, the lower layer **306** is constructed from a material like Hastelloy or may be constructed out of a different material and covered by Hastelloy. The middle layer **304** is deposited on top of the lower layer **306.**

The middle layer **304** may be divided into two layers, from the bottom, first a superconducting layer **304b** and then a fill layer **304a** (shunt layer). A superconducting layer **304b** is deposited directly or indirectly over the lower layer **306.** The superconducting layer **304b** may be deposited with a technique like metal-organic chemical vapor decomposition MOCVD, and is composed of REBCO, YBCO or other appropriate superconducting materials. Layers of buffer material may preferably be placed between the lower layer **306** and the superconducting layer **304b.** The buffer layers may be conformed of several other materials like alumina, yttria, magnesium oxide and lanthanum manganite. These layers may be deposited through a technique like sputtering. The buffer layers may form an appropriate template for the formation of the superconducting layer.

A groove **202** may be created at least through the superconducting layer **304b** using a patterning method, like laser engraving, or another technique, like a mechanical technique or photolithography. On top of the superconducting layer **304b** and filling the groove **202** a fill layer **304a** (shunt layer) may be located. The shunt layer **304a** may offer a path in case of quenching of the superconducting layer **304b.** The fill layer **304a** may be formed of materials of good electrical conductivity like silver. The structural layer **302** is deposited on top of the fill layer **304a.**

Before forming the groove **202,** the described sequence of buffer and superconducting layers may be repeated several times (forming a repeater layer), with best results being achieved between 4 and 80 of the layer sequence, for example between 20 and 40 repetitions of the layer sequence for magnetic fields of about 10 Tesla. The groove may then also be formed in the repeater layer.

The structural layer **302** may have a, preferably non-perforated (and non-grooved), layer of superconducting material in order to create at least partially the phenomenon known as Meisner effect. The Meisner effect prevents the magnetic field from crossing the structural layer **302.**

The lower layer **306** may also include the canal **308,** for which cooling agents may flow to allow cooling of the whole structure. In particular, the superconducting layer **304b** may require adequate cooling during operation.

According to an embodiment, a magnetic wall module is a modular coil.

Other appropriate materials, other layer configurations and/or methods for constructing a magnetic module, for example a modular coil, as a stacking of layers of different materials should be apparent to anyone with ordinary skill in the art. Another example is given in European patent application number EP22305437, filed on April 4, 2022 by the same applicant "RENAISSANCE FUSION", entitled "METHOD FOR MANUFACTURING SUPERCONDUCTING COILS AND DEVICE", which is hereby incorporated by reference to the maximum extent allowable by law.

### Description of a frictionless transportation system

FIG. 4 shows several magnetic wall modules disposed in the shape of a transport cylinder **400** (transport container). In the embodiment of FIG. 4, the transport container has a cylindrical shape and is named transport cylinder, but in other embodiments, the transport container may have another shape, adapted to contain a vehicle.

FIG. 4 shows the transport cylinder **400** in plan view. The transport cylinder **400** may be divided into three sections or zones: a first transition zone **401,** a low-pressure zone **402,** and a second transition zone **403.** The magnetic wall modules in each zone may be different. Preferably, the magnetic wall modules of the low-pressure zone are different from the magnetic wall modules of the transition zones. The magnetic wall modules **400b** (second magnetic wall modules) in transition zone **401** or **403,** may be segmented, for example be substantially a curved square. In contrast, the magnetic wall module (s) **400a** (first magnetic wall module (s)) in the low-pressure zone **402** may be cylindrical, that is, not segmented in the azimuthal direction: this yields better vacuum tightness, mechanical strength and power efficiency, as it avoids resistive joints. Further, the modules **400a** and **400b** may be joined by different kinds of flanges, depending on the shape. First flanges **410b** may be required to join the magnetic wall modules **400b** in the transition zones **401** or **403,** and second flanges **410b** may be needed to join the magnetic wall module(s) **400a** in the low-pressure zone **402** with the magnetic wall modules **400b** in each of the transition zones **401** or **403.** Each of the magnetic modules **400a, 400b** may have the characteristics of the magnetic wall module **100a** of FIG. 1A and/or the magnetic wall module **300** of FIG. 3.

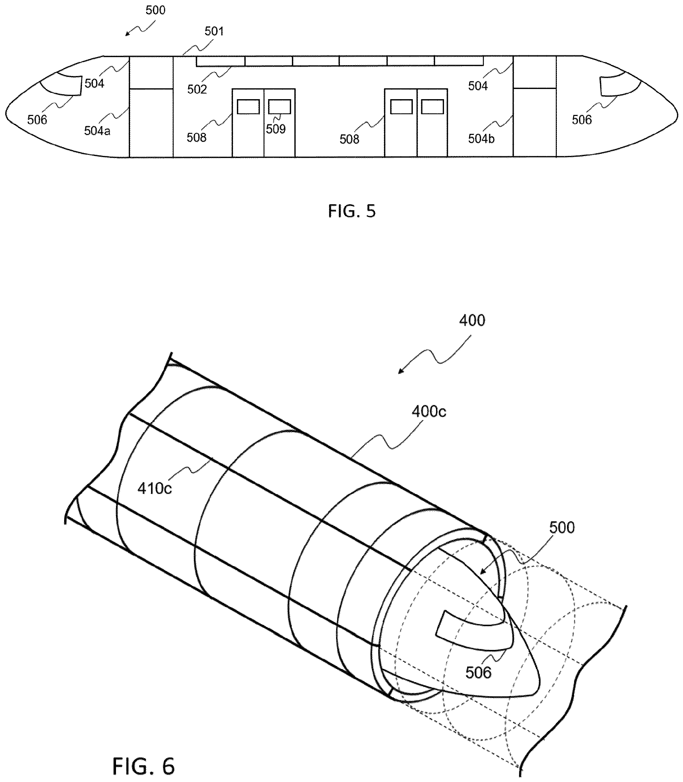

FIG. 5 shows a car of a magnetic train **500** (vehicle) in plan view. In the embodiment of FIG. 5, the vehicle is a train, but in other embodiments, the vehicle may be different from a train, for example an automobile or a truck, and is adapted to move in the transport container.

The magnetic train **500** is comprised of doors **508** and car windows **506.** Doors **508** may also have door windows **509.** Magnetic wall modules or panels **502, 504, 504a** and **504b** are disposed into the housing **501** of the magnetic train **500,** thus forming at least parts of its outer walls. Magnetic wall modules may be identified according to their disposition in the housing **501** of the magnetic train **500.** Upper magnetic panels **502** line the roof and upper side of the wall of the magnetic train **500.** Vertical magnetic panels **504** are located between the doors **508** and the car windows **506** of the magnetic train **500.** Below the vertical magnetic panels, on each side of the magnetic train are rear magnetic panels **504b** and front magnetic panels **504a.** Each of the magnetic panels **502, 504, 504a,** and **504b** may have the characteristics of the magnetic wall module **100a** of FIG. 1A and/or the magnetic wall module **300** of FIG. 3. In another embodiment, the magnetic panels **502, 504, 504a,** and **504b** may in turn be constructed out of permanent magnets.

FIG. 6 shows the magnetic train **500** inside the transport cylinder **400.** The transport cylinder **400** forms a closed volume delimited by magnetic wall modules **400c** that are coupled, for example connected, to each other by flanges **410c.** Because the inside of the transport cylinder **400** is a closed volume, it is possible to remove the air inside and create a vacuum or near vacuum. The length of the transport cylinder **400** depends on the use, and the transport cylinder **400** may be curved. Car windows **506** on the train allow passengers and train operators to see their destination.

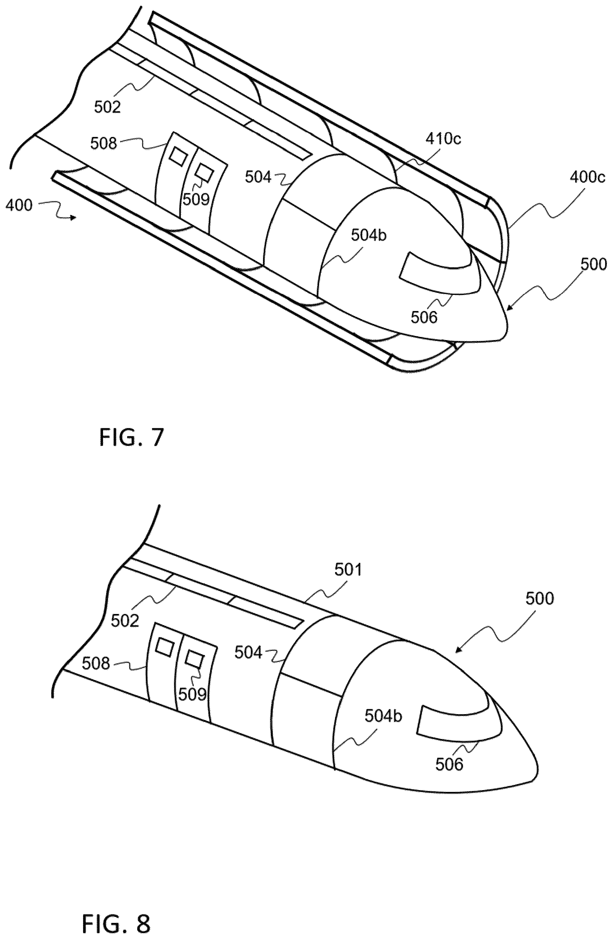

In FIG. 7 a section of the transport cylinder **400** has been removed so that the characteristics of the magnetic train **500** inside it may be appreciated. The magnetic wall modules **400c** that make up the walls of the transport cylinder **400** face the magnetic panels **502, 504, 504a** and **504b** on the exterior of the magnetic train **500,** thus they interact with each other.

FIG. 8 is a perspective view of magnetic train **500,** outside of the transport cylinder **400.** The magnetic panels **504** and **504b** surround the magnetic train **500.** All of the magnetic panels **502, 504, 504b,** and **504a** may be disposed in different positions and sized differently. For instance, it should be possible to completely cover the exterior of the magnetic train **500** with magnetic wall modules like the magnetic wall module **100a** from FIG 1 and/or the magnetic wall module **300** of FIG. 3.

More generally, in a frictionless transportation system, at least a magnetic wall module can be mounted:
- only in the transport container (in which a vehicle is intended to move);
- only on the vehicle (the at least one magnetic wall module may cover at least an outer surface of the vehicle); or
- both in the transport container and on the vehicle.

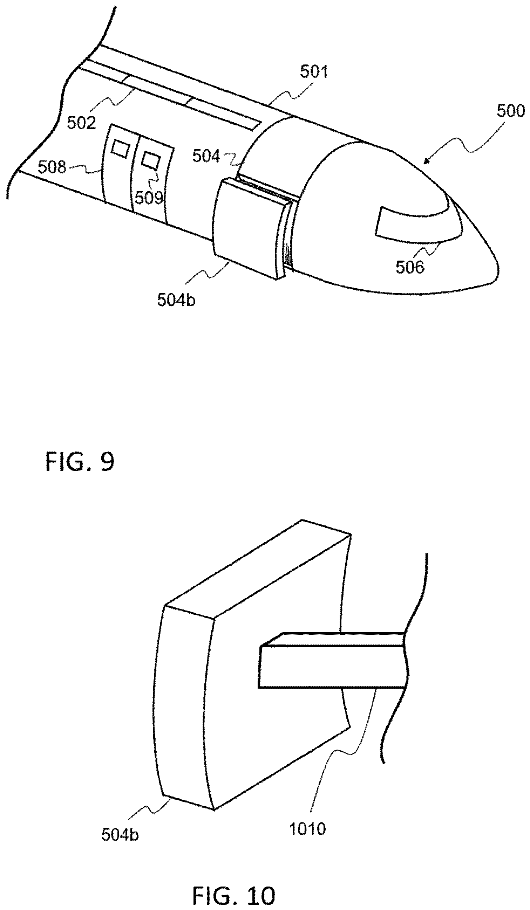

FIG. 9 shows the magnetic panel **504b** in an extender position. All of the magnetic panels **502, 504, 504b,** and **504a** may be extended through the use of extending means like extension rods **1010** described below.

FIG. 10 is a rear view of the magnetic panel **504b,** when it is extended with the use of an extension rod **1010.** One such rod **1010** is shown in FIG. 10. The rod may be operated mechanically through the use of a motor or some other appropriate device.

### Example of operation of the frictionless transportation system

During operation of the frictionless transport system, the magnetic train **500** is housed inside the transportation cylinder **400,** as shown in FIG. 6. As a magnetic field exists inside the transportation cylinder **400,** the magnetic train **500** floats or levitates without moving. The effect of the magnetic field also centers the magnetic train **500** inside the transportation cylinder **400.** The inside of the transportation cylinder **400** is in a near vacuum and has a low-pressure zone **402** alongside transition zones **401** and **403** which may have a higher pressure.

Referring to FIG. 7, in order to make the magnetic train **500** move, the magnetic field produced by the magnetic wall modules **400c** of the transportation cylinder **400** or the one sustained by the magnetic panels **502, 504, 504b,** and **504a** on the surface of the magnetic train **500** must undergo a change that drives the magnetic train **500** forward or backward. Modifying the current flow can create this effect.

Because the magnetic train **500** is inside a near vacuum, as it moves it suffers from very low air resistance and because the train is floating and there are no rails it is not subjected to contact friction. Therefore, the movement of the magnetic train **500** may be described as frictionless. During operation the magnetic train **500** moves from low-pressure zone **402** to transition zones **401** or **403,** where air pressure slightly increases, until arriving at train stations, where the air pressure is regular. As the magnetic train **500** moves between zones, its speed changes. When the magnetic train **500** is leaving a train station it must accelerate. Acceleration is done in transition zones **401** or **403,** until it reaches its maximum speed and reaches the low-pressure zone **402.** When the train is approaching the station, it must decelerate. Coming from the low-pressure zone **402,** it enters one of the transition zones **401** or **403** and its speed decreases until it reaches the station and makes a full stop. At the station, doors **508** open and passenger or cargo may exit or enter the train.

### Contactless braking system

The described embodiment of the frictionless transportation system may also include a contactless braking system. In one advantageous embodiment, the contactless braking system makes use of the capacity of magnetic wall modules to extend as shown by magnetic panel **504b** in FIG. 9 and FIG. 10. This makes use of a natural phenomenon common to all magnetic fields. Magnetic fields resist abrupt changes in their configuration.

When the magnetic train **500** must be stopped or slowed down, the magnetic panels **502, 504, 504b,** and **504a** should be extended. In the following description, reference is made to the front magnetic panel **504b,** shown in FIG. 10. The extension rod **1010** must push the panel **504b** outward, reducing the space between the panel **504b** and the inner wall of the transportation cylinder **400.** This causes an abrupt change in the configuration of the magnetic field, which, in the described embodiment, would result in a sharp decrease in the speed of the magnetic train **500.** The intensity of the speed change may be controlled by how much or how fast the panel **504b** is extended.

Example embodiments of the invention are summarized here. Other embodiments can also be understood from the entirety of the specification as well as the claims filed herein.

Example 1. An assembly for a transportation system, the assembly comprising a plurality of magnetic wall modules (100a, 100b; 300) coupled to each other, wherein each module is adapted to conducting current in order to form a magnetic field, and has a first wall (106a, 106b; 306) and a second wall (104a, 104b; 304) assembled together, wherein the second wall has a groove (202a, 202b) separating said second wall into at least two different electrically conducting regions.

Example 2. The assembly according to example 1, wherein the groove (202a) of a module (100a) is adapted to be connected to the groove (202b) of another module (100b) to form a continuous groove (202).

Example 3. The assembly according to example 1 or 2, wherein each module further comprises a third wall (102a, 102b; 302) assembled to the second wall (104a, 104b; 304) so that the second wall is between the first wall and the third wall.

Example 4. The assembly according to any one of examples 1 to 3, wherein the grooves (202a, 202b, 202) of the plurality of modules (100a, 100b) are adapted to guide a flow of current into a certain direction, or into different paths, at least through the second walls (104a, 104b) of the modules.

Example 5. The assembly according to any one of examples 1 to 4, wherein at least a module (100a) of the plurality of modules is mechanically, and possibly electrically, coupled to another module (100b) of the plurality of modules.

Example 6. The assembly according to any one of examples 1 to 5 in combination with example 3, wherein at least a module (100a) of the plurality of modules comprises connecting means (110a) located on a face (114a) of the third wall (102a) and adapted to mechanically, and possibly electrically, couple said module to connecting means (110b) located on a face (114b) of the third wall (102b) of another module (100b) of the plurality of modules, for example the connecting means comprise a mechanical connector like a flange (110a) comprising holes (112a) adapted to be aligned with holes (112b) of a flange (110b) of the other module.

Example 7. The assembly according to any one of examples 1 to 6, wherein at least a module (100a) of the plurality of modules comprises at least one canal (108a) that crosses the first wall (106a) of the module, for example to enable a cooling fluid, like nitrogen or helium, flowing through the module, each canal being for example adapted to form a single canal with a canal (108b) that crosses the first wall (106b) of another module (100b) of the plurality of modules.

Example 8. The assembly according to any one of examples 1 to 7 in combination with example 3, wherein the first wall (106a) of a module (100a) of the plurality of modules is aligned with the first wall (106b) of another module (100b) of the plurality of modules, the second wall (104a) of the module is aligned with the second wall (104b) of the other module, and the third wall (102a) of the module is aligned with the third wall (102b) of the other module.

Example 9. The assembly according to any one of examples 1 to 8, wherein the modules are constructed to exhibit superconducting characteristics.

Example 10. The assembly according to any one of examples 1 to 9, wherein at least a module (300) of the plurality of modules comprises a stacking of different materials in which:
- the first wall (306) is composed or covered by a material like Hastelloy;
- the second wall (304) includes a superconducting layer (304b), the groove (202) of the at least one module being patterned at least in the superconducting layer, and a shunt layer (304a) on the superconducting layer and in the groove, the shunt layer being made of a metal, for example silver.

Example 11. The assembly according to example 10, wherein the stacking further comprises at least a buffer layer, preferably a plurality of buffer layers, between the first wall (306) and the superconducting layer (304b), the at least one buffer layer being for example conformed of materials like alumina, yttria, magnesium oxide and/or lanthanum manganite; the groove (202) being patterned at least in the buffer and superconducting layers.

Example 12. The assembly according to example 11, wherein the second wall (304) further includes a repeater layer under the shunt layer (304a), the repeater layer comprising a repetition of the buffer and superconducting layers, preferably several repetitions, for example between 4 and 80 repetitions, the groove (202) being patterned in the buffer, the superconducting and the repeater layers.

Example 13. The assembly according to example 11 or 12 in combination with example 3, wherein the third wall (302) includes another superconducting layer, preferably a non-perforated and non-grooved layer.

Example 14. A magnetic wall module (100a, 100b; 300) adapted to an assembly according to any one of examples 1 to 13.

Example 15. A transportation system comprising a vehicle (500) and a transport container (400) adapted to contain the vehicle (500), wherein the transport container and/or the vehicle comprises a magnetic wall module (400a, 400b, 400c; 502, 504, 504a, 504b) according to example 14 or an assembly according to any one of examples 1 to 13.

Example 16. The system according to example 15, wherein the transport container (400) comprises at least a magnetic wall module (400a, 400b, 400c) according to example 14 or an assembly according to any one of examples 1 to 13.

Example 17. The system according to example 16, wherein the transport container (400) comprises a low-pressure zone (401) with at least a first magnetic wall module (400a) and at least a transition zone (402, 403) adjacent to the low-pressure zone, preferably a transition zone at each end of the low-pressure zone, with at least a second magnetic wall module (400b) different from the at least one first magnetic wall modules (400a), for example the low-pressure zone (401) is adapted to be in a near vacuum and the at least one transition zone (402, 403) is adapted to be in a higher pressure than the low-pressure zone (401).

Example 18. The system according to any one of examples 15 to 17, wherein the vehicle (500) comprises a housing (501) and at least a magnetic panel (502, 504, 504a, 504b) positioned in or on a surface of the housing, the at least one magnetic panel comprising a magnetic wall module according to example 14, an assembly according to any one of examples 1 to 13, and/or a permanent magnet.

Example 19. The system according to example 18 in combination with example 16 or 17, wherein the at least one magnetic panel (502, 504, 504a, 504b) is positioned in order to face the at least one magnetic wall module (400a, 400b, 400c) of the transport container (400).

Example 20. The system according to example 18 or 19, wherein the vehicle (500) comprises extension means, for example an extension rod (1010), adapted to extend at least one magnetic panel (504b) with respect to the housing (501) of said vehicle towards the transport container (400).

Example 21. The system according to any one of examples 15 to 20, further comprising a contactless braking system adapted to brake the vehicle.

Example 22. The system according to example 20, wherein the extension means form at least part of a contactless braking system adapted to brake the vehicle.

Example 23. The system according to any one of examples 15 to 22, wherein the transport container (400) is a transport cylinder and the vehicle (500) is a magnetic train.

Example 24. A method for fabricating a magnetic wall module according to example 14, the method comprising:
- providing a first layer (306), for example composed or covered by a material like Hastelloy;
- depositing, for example by metal-organic chemical vapor deposition, a superconducting layer (304b) on the first layer;
- removing material from the superconducting layer, for example using a laser engraving technique, to form a groove (202);
- depositing a layer of a metal on the superconducting layer, comprising filling the groove with said metal, for example silver, to form a shunt layer (304a).

Example 25. The method according to example 24, wherein the method further comprises forming, for example using a sputtering technique, at least a buffer layer, preferably a plurality of buffer layers, before forming the superconducting layer, the at least one buffer layer being for example conformed of materials like alumina, yttria, magnesium oxide and/or lanthanum manganite.

Example 26. The method according to example 25, wherein the method further comprises forming a repeater layer before forming the shunt layer (304), the repeater layer comprising the repetition of the buffer and superconducting layers, and preferably several repetitions, for example between 4 and 80 repetitions.

Example 27. The method according to any of examples 24 to 26, further comprising forming another, preferably non-perforated, superconducting layer on the shunt layer (304a).

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

List of acronyms:
- Maglev: Magnetic levitation train
- MOCVD: Metal-organic chemical vapor deposition
- REBCO: Rare-earth barium copper oxide
- YBCO: Yttrium barium copper oxide

## Claims

1. An assembly for a transportation system, the assembly comprising a plurality of magnetic wall modules (100a, 100b; 300) coupled to each other, wherein each module is adapted to conducting current in order to form a magnetic field, and has a first wall (106a, 106b; 306) and a second wall (104a, 104b; 304) assembled together, wherein the second wall has a groove (202a, 202b) separating said second wall into at least two different electrically conducting regions.

2. The assembly according to claim 1, wherein the groove (202a) of a module (100a) is adapted to be connected to the groove (202b) of another module (100b) to form a continuous groove (202).

3. The assembly according to claim 1 or 2, wherein each module further comprises a third wall (102a, 102b; 302) assembled to the second wall (104a, 104b; 304) so that the second wall is between the first wall and the third wall.

4. The assembly according to any one of claim 3, wherein at least a module (100a) of the plurality of modules comprises connecting means (110a) located on a face (114a) of the third wall (102a) and adapted to mechanically, and possibly electrically, couple said module to connecting means (110b) located on a face (114b) of the third wall (102b) of another module (100b) of the plurality of modules, for example the connecting means comprise a mechanical connector like a flange (110a) comprising holes (112a) adapted to be aligned with holes (112b) of a flange (110b) of the other module.

5. The assembly according to any one of claims 1 to 4, wherein at least a module (100a) of the plurality of modules comprises at least one canal (108a) that crosses the first wall (106a) of the module, for example to enable a cooling fluid, like nitrogen or helium, flowing through the module, each canal being for example adapted to form a single canal with a canal (108b) that crosses the first wall (106b) of another module (100b) of the plurality of modules.

6. The assembly according to any one of claims 1 to 5 in combination with claim 3, wherein the first wall (106a) of a module (100a) of the plurality of modules is aligned with the first wall (106b) of another module (100b) of the plurality of modules, the second wall (104a) of the module is aligned with the second wall (104b) of the other module, and the third wall (102a) of the module is aligned with the third wall (102b) of the other module.

7. The assembly according to any one of claims 1 to 6, wherein the modules are constructed to exhibit superconducting characteristics.

8. The assembly according to any one of claims 1 to 7, wherein at least a module (300) of the plurality of modules comprises a stacking of different materials in which:
- the first wall (306) is composed or covered by a material like Hastelloy;
- the second wall (304) includes a superconducting layer (304b), the groove (202) of the at least one module being patterned at least in the superconducting layer, and a shunt layer (304a) on the superconducting layer and in the groove, the shunt layer being made of a metal, for example silver.

9. The assembly according to claim 8, wherein the stacking further comprises at least a buffer layer, preferably a plurality of buffer layers, between the first wall (306) and the superconducting layer (304b), the at least one buffer layer being for example conformed of materials like alumina, yttria, magnesium oxide and/or lanthanum manganite; the groove (202) being patterned at least in the buffer and superconducting layers.

10. The assembly according to claim 9, wherein the second wall (304) further includes a repeater layer under the shunt layer (304a), the repeater layer comprising a repetition of the buffer and superconducting layers, preferably several repetitions, for example between 4 and 80 repetitions, the groove (202) being patterned in the buffer, the superconducting and the repeater layers.

11. The assembly according to claim 9 or 10 in combination with claim 3, wherein the third wall (302) includes another superconducting layer, preferably a non-perforated and non-grooved layer.

12. A magnetic wall module (100a, 100b; 300) adapted to an assembly according to any one of claims 1 to 11.

13. A transportation system comprising a vehicle (500) and a transport container (400) adapted to contain the vehicle (500), wherein the transport container and/or the vehicle comprises a magnetic wall module (400a, 400b, 400c; 502, 504, 504a, 504b) according to claim 12 or an assembly according to any one of claims 1 to 11.

14. The system according to claim 13, wherein the transport container (400) comprises at least a magnetic wall module (400a, 400b, 400c) according to claim 12 or an assembly according to any one of claims 1 to 11.

15. The system according to claim 14, wherein the transport container (400) comprises a low-pressure zone (401) with at least a first magnetic wall module (400a) and at least a transition zone (402, 403) adjacent to the low-pressure zone, preferably a transition zone at each end of the low-pressure zone, with at least a second magnetic wall module (400b) different from the at least one first magnetic wall modules (400a), for example the low-pressure zone (401) is adapted to be in a near vacuum and the at least one transition zone (402, 403) is adapted to be in a higher pressure than the low-pressure zone (401).

16. The system according to any one of claims 13 to 15, wherein the vehicle (500) comprises a housing (501) and at least a magnetic panel (502, 504, 504a, 504b) positioned in or on a surface of the housing, the at least one magnetic panel comprising a magnetic wall module according to claim 12, an assembly according to any one of claims 1 to 11, and/or a permanent magnet.

17. The system according to claim 16 in combination with claim 14 or 15, wherein the at least one magnetic panel (502, 504, 504a, 504b) is positioned in order to face the at least one magnetic wall module (400a, 400b, 400c) of the transport container (400).

18. The system according to claim 16 or 17, wherein the vehicle (500) comprises extension means, for example an extension rod (1010), adapted to extend at least one magnetic panel (504b) with respect to the housing (501) of said vehicle towards the transport container (400).

19. The system according to claim 18, wherein the extension means form at least part of a contactless braking system adapted to brake the vehicle.

20. The system according to any one of claims 13 to 19, wherein the transport container (400) is a transport cylinder and the vehicle (500) is a magnetic train.
